# DEMANDE DE BREVET EUROPEEN

(11) **EP 3 598 076 A1**
(43) Date de publication de la demande: **22.01.2020**
(21) Numéro de dépôt: 19162614.2
(22) Date de dépôt: 13.03.2019
(51) Int. Cl.: G01D 11/24, G01L 19/14

(54) **DISPOSITIF DE MESURE D'UN PARAMETRE PHYSIQUE D'UN FLUIDE D'UN CIRCUIT DE VEHICULE AUTOMOBILE**

(30) Priorité: 30.03.2018 FR 1870371
(71) Demandeur: Akwel SA, 01410 Champfromier (FR)
(72) Inventeur: SPANEVELLO, MARCO MARTINO, 84210 VENASQUE (FR)

(57) **Abrégé**

Le dispositif (12) comprend une partie distale (18) de connecteur comprenant un connecteur de raccordement électrique à un circuit électrique externe, une partie proximale de mesure comprenant un détecteur (28) du paramètre physique destiné à être en contact fluidique, le détecteur (28) a une forme générale de plaquette (32) délimitant une première face (32A) de contact électrique et une deuxième face opposée de mesure, un organe (36) de jonction électrique du détecteur (28) et du connecteur. Selon l'invention, le détecteur (28) est configuré dans le dispositif (12) de telle sorte que les deux faces du détecteur (28) soient immergées et en contact fluidique direct.

## Description

La présente invention concerne un dispositif de mesure d'un paramètre physique d'un fluide, tel qu'un fluide circulant dans un circuit d'un véhicule automobile. Elle s'applique plus particulièrement mais non exclusivement à la mesure de la pression ou de la température du fluide circulant dans de tels circuits ou encore à la mesure de l'humidité résidant dans ces circuits.

Un tel dispositif de mesure est particulièrement adapté pour être installé dans différents circuits du véhicule automobile tels que des circuits d'assistance freinage, des circuits de vide pour le pilotage des auxiliaires, des circuits de carburant, des circuits de vapeurs de carburant et/ou de vapeurs d'huile, des circuits de refroidissement, des circuits de fluide de dépollution (solution d'urée, additifs pour filtre à particules), etc.

En général, comme cela est connu notamment du document EP 2 559 987 A2, le dispositif comprend un corps de boîtier comprenant une première partie distale formant connecteur et une deuxième partie proximale formant détecteur délimitant une chambre de mesure pourvu d'un prolongement axial destiné à être immergé au moins partiellement dans le milieu. Les deux parties sont assemblées entre elles pour former un volume étanche à l'intérieur duquel s'étend un élément de détection du paramètre physique à mesurer.

Dans la solution proposée par ce document, l'élément de détection comprend une plaquette de circuit imprimé munie d'une première face tournée vers le milieu à étudier et en contact avec le fluide par l'intermédiaire de la chambre de mesure et d'une deuxième face en contact électrique avec la partie connecteur par des contacts électriques mobiles par rapport à la deuxième face.

Afin d'isoler de façon étanche les contacts électriques et la deuxième face supportant les circuits électroniques, le dispositif comprend un joint d'étanchéité au fluide permettant d'empêcher l'infiltration du fluide en provenance de la chambre de mesure dans le volume à l'intérieur duquel s'étend la deuxième face. Par ailleurs, les deux parties de connecteur et de détecteur sont assemblées par sertissage puis par dépôt d'une résine pour protéger le volume intérieur de l'intrusion de divers contaminants tels que par exemple l'humidité, les poussières, etc. Par conséquent, seule la face de mesure de l'élément de détection est exposée au fluide, l'autre face étant protégée de l'humidité et du fluide à l'intérieur du volume étanche.

L'inconvénient de ce type de dispositif de mesure est que, afin d'assurer une étanchéité efficace du volume étanche par rapport au fluide, le joint torique d'étanchéité au fluide doit être comprimé fortement axialement ce qui a pour effet d'exercer des contraintes mécaniques importantes sur la plaquette de l'élément de détection.

Or, cette plaquette supporte l'élément sensible à la pression et les contraintes mécaniques appliquées sur celle-ci peuvent altérer le signal généré par l'élément sensible à la pression. Une calibration individuelle doit par conséquent être effectuée pour compenser cette déviation.

En outre, dans ce même document, l'élément sensible à la température est déporté à l'intérieur de la chambre de mesure ce qui complexifie le dispositif de mesure.

L'invention a notamment pour objet de fournir un dispositif de mesure d'un paramètre physique d'un fluide de véhicule automobile qui permette de remédier à ces inconvénients en proposant un dispositif de mesure de conception simple et d'une grande précision de mesure.

A cet effet, l'invention a pour objet un dispositif de mesure d'un paramètre physique d'un fluide, en particulier un fluide d'un circuit d'un véhicule automobile, comprenant un boîtier d'axe principal X, ledit boîtier comprenant une partie distale de connecteur comprenant un connecteur de raccordement électrique à un circuit électrique externe et une partie proximale de mesure comprenant un détecteur du paramètre physique destiné à être en contact fluidique, le détecteur a une forme générale de plaquette délimitant des première et deuxième faces opposées, un organe de jonction électrique du détecteur et du connecteur, caractérisé en ce que le dispositif comprend un corps d'étanchéité au fluide configuré pour recouvrir intimement au moins la première face de contact électrique du détecteur en assurant une continuité d'étanchéité avec une zone de jonction du détecteur avec l'organe de jonction électrique et en ce que le détecteur est configuré dans le dispositif de telle sorte que les deux faces du détecteur soient immergées et en contact fluidique direct.

Grâce à cet agencement vertical du détecteur et la présence du corps d'étanchéité au lieu d'un joint torique, la mesure de pression et ou de température réalisée par le détecteur est très fiable. En effet, l'absence de compression axiale d'un joint torique permet de protéger le détecteur d'un signal parasite. En outre, du fait que le détecteur est en contact fluidique direct grâce à la protection offerte par le corps d'étanchéité, la mesure de température est d'une grande fiabilité ainsi que la mesure de pression.

Un dispositif de mesure peut en outre comporter l'une ou plusieurs des caractéristiques suivantes.

Dans un mode de réalisation préféré de l'invention, le détecteur s'étend transversalement et est retenu à la partie de mesure par l'intermédiaire de l'organe de jonction.

Dans un mode de réalisation préféré de l'invention, la partie de mesure délimite un logement configuré pour recevoir et retenir verticalement le détecteur de telle sorte que les faces du détecteur s'étendent sensiblement parallèlement à l'axe principal X.

Dans un mode de réalisation préféré, les parties de connecteur et de détecteur sont séparées entre elles transversalement par une paroi de séparation munie d'au moins un orifice traversant par lequel l'organe de jonction électrique s'étend de part et d'autre de la paroi.

De préférence, le connecteur est formé par une partie distale de l'organe de jonction électrique faisant saillie à l'intérieur de la partie de connecteur.

De préférence, l'organe de jonction comprend une pluralité de broches métalliques qui s'étendent en saillie dans le prolongement d'une face du détecteur. Ainsi, grâce à cette caractéristique additionnelle, les broches peuvent être directement soudées sur la plaquette de circuit imprimé ce qui permet d'éviter tout risque de faux contacts, chutes de tension dues à la résistance de contact, erreurs de lecture des signaux. L'absence de contacts mobiles et la présence de broches soudées présente de plus l'avantage de pouvoir appliquer une couche de protection avant ou après assemblage des broches afin d'améliorer la résistance chimique du détecteur dans les milieux agressifs.

Dans un mode de réalisation préféré, le corps de connecteur comprend un embout délimitant un corps creux à l'intérieur duquel le connecteur fait saillie.

Dans un mode de réalisation préféré, le corps d'étanchéité est formé par une couche de revêtement déposée en surface du détecteur réalisée à partir d'un matériau d'étanchéité pouvant s'écouler, par exemple une résine polymère.

De préférence, le logement comprend à une extrémité distale une embase qui forme un bac pour contenir un matériau d'étanchéité pouvant s'écouler, par exemple une résine polymère.

Dans un mode de réalisation préféré, le corps d'étanchéité est formé par une couche de revêtement déposée en surface du détecteur réalisée à partir d'un matériau d'étanchéité pouvant s'écouler dans un premier état et pouvant solidifier dans un deuxième état, par exemple une résine polymère.

Dans un mode de réalisation préféré de l'invention, le logement comprend à une extrémité distale une embase qui forme un bac pour contenir un matériau d'étanchéité pouvant s'écouler, par exemple une résine polymère.

Dans un mode de réalisation préféré de l'invention, le matériau d'étanchéité est destiné à solidifier dans le bac pour former une masse d'ancrage d'une extrémité distale du détecteur, le bac comprenant au fond un orifice de passage de l'organe de jonction.

De préférence, le corps d'étanchéité est formé par un unique matériau d'étanchéité destiné à recouvrir la surface externe du détecteur en formant une couche et à former une masse à l'extrémité distale du détecteur.

De préférence, le logement s'étend axialement et est presque totalement ajouré sur son extrémité proximale pour permettre au fluide de circuler autour du détecteur.

De préférence, le logement est formé à son extrémité proximale par des rails de guidage profilés.

De préférence, le corps d'étanchéité est pourvu d'un bord périphérique muni d'une extrémité libre épaissie formant une lèvre d'étanchéité destinée à être partiellement logée dans un relief périphérique externe du boîtier.

Dans un mode de réalisation préféré, le corps d'étanchéité est réalisé dans un matériau élastiquement déformable tel qu'un élastomère.

Dans un mode de réalisation préféré, le détecteur comprend au moins un élément sensible à un paramètre physique choisi parmi un capteur d'humidité, un capteur de pression et un capteur de température.

De préférence, la plaquette du détecteur comprend une partie principale et un prolongement axial de section transversale rétrécie.

L'invention a encore pour objet un système de mesure d'un paramètre d'un fluide, comprenant un dispositif de détection d'un paramètre physique et un support du dispositif de mesure, ledit support comprenant une chambre de circulation de fluide, caractérisé en ce que le dispositif de mesure étant selon l'invention, le dispositif et le support comprennent des moyens d'assemblage complémentaires et en ce que dans la position assemblée, le détecteur est destiné à s'étendre à l'intérieur de la chambre de circulation de fluide.

Par exemple, le support comprend deux embouts de raccordement à au moins deux tronçons d'une conduite de circulation de fluide externe.

De préférence, le support comprend une portion cylindrique de révolution autour de l'axe principal X formant la chambre de mesure et un prolongement axial destiné à être inséré à l'intérieur d'un orifice d'une conduite de circulation du fluide.

De préférence, le dispositif et le support délimite à l'état assemblé une gorge périphérique de réception d'un joint torique d'environnement

D'autres caractéristiques et avantages de l'invention apparaîtront à la lumière de la description qui suit, faite en référence aux dessins annexés dans lesquels :
- la figure 1 représente une vue en perspective d'un système de mesure selon un premier mode de réalisation de l'invention ;
- la figure 2 est une vue de dessous en perspective éclatée du système de la figure 1 ;
- la figure 3 représente une vue en perspective éclatée du système de la figure 1 ;
- les figures 4A et 4B sont des vues en perspective respectivement d'une première face et d'une deuxième face de l'élément de détection du système de mesure visible sur les figures 2 et 3 ;
- la figure 5 est une vue en coupe du système selon l'axe V-V de la figure 1 ;
- la figure 6 est une vue agrandie d'un logement de l'élément de détection représenté en figures 4A et 4B;
- la figure 7 est une vue en perspective éclatée d'un système de mesure selon un deuxième mode de réalisation de l'invention ;
- les figures 8 et 9 sont des vues en perspective selon des points de vues distincts d'un dispositif de mesure du système de mesure de la figure 7 ;
- la figure 10 représente une vue en coupe selon l'axe X-X du dispositif de mesure de la figure 8 ;
- la figure 11 représente une vue en coupe du système de mesure selon une variante du premier mode de réalisation de l'invention.
- les figures 12 à 14 représentent des vues en perspective, de côté et en coupe d'un système de mesure selon un troisième mode de réalisation de l'invention.

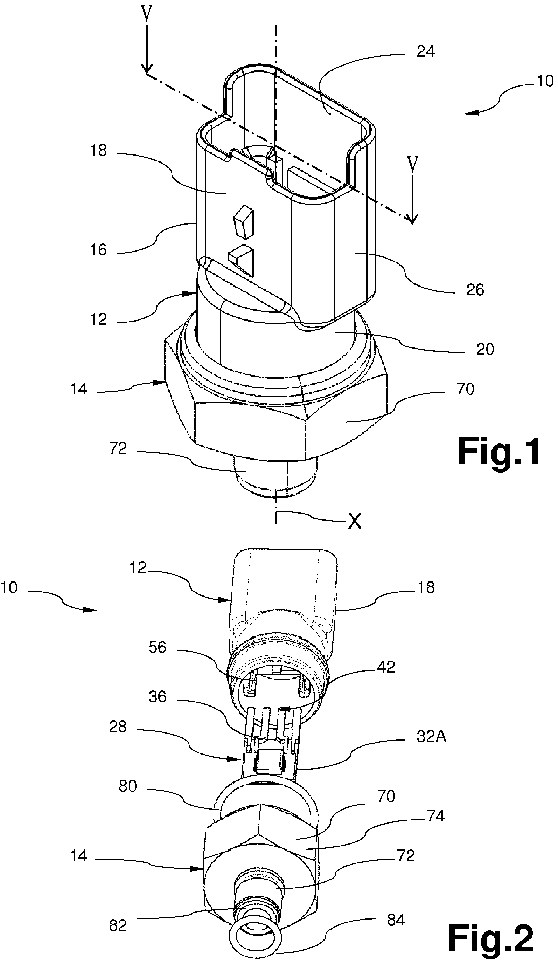

On a représenté de façon schématique sur **la** **figure 1** un système de mesure d'un paramètre physique d'un fluide selon un premier mode de réalisation de l'invention. Ce système est désigné par la référence générale 10. Ce système 10 s'applique plus particulièrement à la détermination d'un paramètre physique d'un fluide d'un circuit d'un véhicule automobile. Ce système 10 est plus particulièrement adapté mais non exclusivement à la mesure de la pression ou de la température du fluide circulant dans de tels circuits ou encore à la mesure de l'humidité résidant dans ces circuits.

Un tel système de mesure 10 est particulièrement adapté pour être installé dans différents circuits du véhicule automobile tels que des circuits d'assistance freinage, des circuits de vide pour le pilotage des auxiliaires, des circuits de carburant, des circuits de vapeurs de carburant et/ou vapeurs d'huile, des circuits de refroidissement, des circuits de fluide de dépollution (solution d'urée, additifs pour filtre à particules), etc.

Comme cela est illustré sur **la** **figure 1**, ce système 10 comprend notamment un dispositif 12 de mesure du paramètre physique du fluide ainsi qu'un support 14 du dispositif de mesure 12.

Ce dispositif 12 comprend un boîtier 16 d'axe principal X. Le boîtier 16 comprend une partie distale 18 de connecteur et une partie proximale 20 de mesure. Dans la présente description, un élément sera qualifié de proximal ou de distal selon qu'il est proche ou éloigné axialement du point de prise de mesure du dispositif de mesure 12.

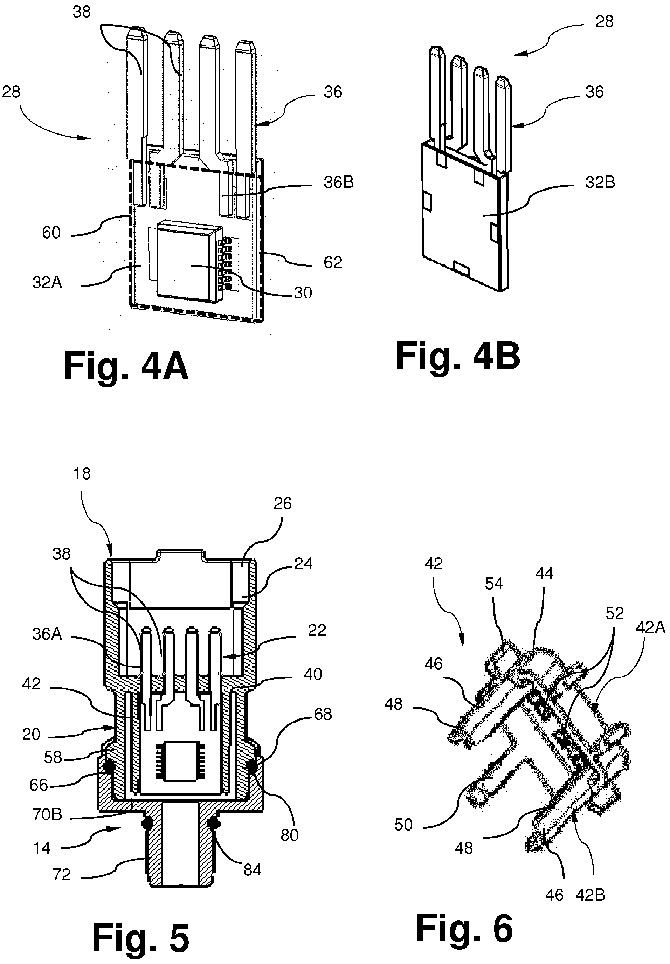

Selon l'invention et comme illustré sur **la** **figure 5**, la partie distale 18 de connecteur comprend un connecteur 22 de raccordement électrique à un circuit électrique externe (non représenté). De préférence, la partie distale 18 comprend un corps formé par un embout 26 délimitant un corps creux 24 à l'intérieur duquel le connecteur 22 fait saillie.

La partie proximale de mesure 20 comprend un détecteur 28 du paramètre physique destiné à être en contact fluidique avec le milieu à étudier représenté en détail sur **les** **figures 4A et 4B****.** Le détecteur 28 comprend au moins un élément sensible 30 à un paramètre physique choisi parmi un capteur d'humidité, un capteur de pression et un capteur de température. Selon l'invention, le détecteur 28 a une forme générale de plaquette 32 délimitant des première 32A et deuxième 32B faces opposées. Bien entendu, le détecteur 28 peut comporter plusieurs éléments sensibles 30 à des paramètres distincts, supportés sur la plaquette 32.

Au sens de la présente invention, on entend par plaquette, tout élément dont une dimension (l'épaisseur) est négligeable par rapport aux deux autres. Cette plaquette 32 peut présenter des faces opposées 32A, 32B plates ou bombées, concaves ou convexes. La plaquette 32 peut être indifféremment de forme carré ou rectangulaire, voire éventuellement d'autres formes géométriques.

Dans cet exemple, l'élément sensible 30 comprend un composant électronique, par exemple un composant de type ASIC (sigle anglais pour « Application-Specific Integrated Circuit » ou littéralement « circuit intégré propre à une application »). Ce composant électronique 30 est par exemple portée par la première face 32A de la plaquette 32. Le détecteur 28 comprend dans cet exemple au moins un élément sensible à la pression et au moins un élément sensible à la température.

La plaquette 32 peut être réalisée par exemple en céramique, constituée par exemple essentiellement d'alumine et le composant 30 peut être rapporté par sérigraphie sur la plaquette ou encore par soudage ou brasage ou encore par une combinaison de ces techniques. Cette plaquette 32 peut dans ce cas incorporer une membrane déformable associée à un matériau piézo-résistif agencé selon une architecture en pont de Wheatstone. De façon connue en soi, une déformation de la membrane provoque une variation de résistance et donc une variation de tension. Cette variation de tension est liée à la pression exercée sur la membrane par une loi de corrélation prédéfinie.

En variante, l'élément 30 peut comporter une puce de microsystème électromécanique (MEMS) par exemple munie d'une membrane sensible et d'un circuit de détection de contrainte permettant de mesurer l'état de compression de la membrane qui est proportionnel à la pression de fluide. Dans ce cas, la plaquette peut être également de façon classique une carte de circuit imprimée connue en soi désignée couramment par le signe anglophone PCB pour « printed circuit board ».

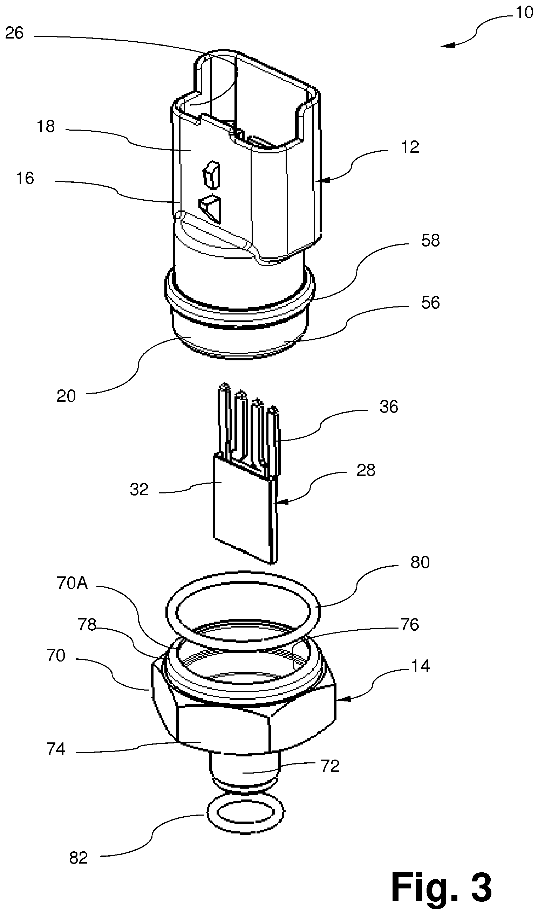

Sur **les** **figures 2 à 5**, on voit que le dispositif 12 comprend encore un organe 36 de jonction électrique du détecteur 28 et du connecteur 22. De préférence et comme cela est illustré sur **la** **figure 5**, le connecteur 22 est formé par une partie distale 36A de l'organe de jonction électrique 36 faisant saillie à l'intérieur de la partie de connecteur 18. En outre, l'organe de jonction 36 comprend de préférence une partie proximale 36B qui est fixée au détecteur 28.

A cet effet, par exemple, l'organe de jonction 36 comprend une pluralité de broches métalliques 38 qui s'étendent en saillie dans le prolongement d'une face 32A du détecteur 28 (**figure 4A**).

En outre, comme cela est visible sur **la** **figure 5**, les parties de connecteur 18 et de détecteur 20 sont séparées entre elles transversalement par une paroi 40 de séparation munie d'au moins un orifice traversant par lequel l'organe de jonction électrique 36 s'étend de part et d'autre de la paroi 40.

De préférence, la partie de détecteur 20 délimite un logement 42 configuré pour recevoir et retenir verticalement le détecteur 28 de telle sorte que les faces 32A, 32B du détecteur 28 s'étendent sensiblement parallèlement à l'axe principal X. Le logement 42 est destiné à s'étendre axialement à partir de la paroi de séparation 40 et comprend une extrémité distale 42A fixée à la paroi de séparation 40 et une extrémité libre proximale 42B.

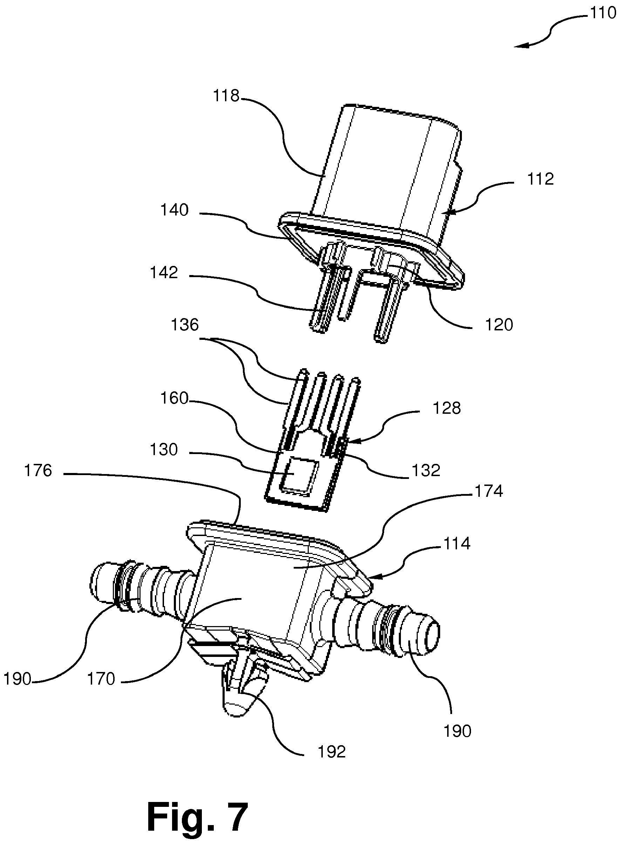

Le logement 42 comprend dans l'exemple illustré sur les **figures 6** **et** **7** à son extrémité distale 42A une embase 44 qui forme un bac pour contenir un matériau d'étanchéité pouvant s'écouler, par exemple une résine polymère. En outre, de préférence, le logement 42 est presque totalement ajouré sur son extrémité proximale 42A pour permettre au fluide de circuler autour du détecteur 28.

Par exemple, le logement 42 est formé à son extrémité proximale 42B par des moyens de guidage 46 comprenant des rails 48 de guidage profilés. Par exemple, les moyens de guidage 46 comprennent deux rails de guidage 48 latéraux profilés en forme de coin et au moins un rail 50 de guidage central en forme de languette.

En outre, de préférence et comme cela est visible sur **la** **figure 6**, l'embase 44 comprend au fond au moins un orifice de passage 52 de l'organe de jonction 36 afin que ce dernier puisse traverser la paroi de séparation 40 sur laquelle est rapportée le logement 42 jusqu'à la partie détecteur 20 et s'étendre de part et d'autre de cette paroi 40. Dans cet exemple, il y a autant d'orifices de passage 52 que de broches 38 dans l'organe de jonction 36. En outre, le logement 42 comprend par exemple des ailettes 54 de rigidification s'étendant en périphérie du bac 44.

Conformément à l'invention, le dispositif 12 comprend en outre un corps 60 d'étanchéité au fluide agencé de telle sorte que la jonction électrique du dispositif de mesure 12 en position de service, soit isolée du fluide de façon étanche et conformé pour envelopper intimement au moins l'extrémité proximale 28B du détecteur 28. Plus précisément, le détecteur 28 est destiné à être en contact fluidique direct au travers du corps d'étanchéité 60 afin par exemple de faciliter les échanges thermiques. De préférence, le corps d'étanchéité 60 est configuré pour recouvrir intimement au moins la première face 32A de contact électrique du détecteur 28 en assurant une continuité d'étanchéité avec une zone de jonction du détecteur 28 avec l'organe de jonction électrique 36. En outre, de préférence, le détecteur 28 est configuré dans le dispositif 12 de telle sorte que les deux faces du détecteur 28 soient immergées et en contact fluidique direct.

De préférence et comme cela est illustré sur **la** **figure 4A**, le corps d'étanchéité 60 est formé par une couche 62 de revêtement déposée sur au moins la face 32A portant l'élément sensible 30 en surface du détecteur 28 (représentée de façon schématique sur **cette** **figure 4A** en trait discontinu). La couche 62 est réalisée par exemple à partir d'un matériau d'étanchéité pouvant s'écouler dans un premier état et pouvant solidifier dans un deuxième état, par exemple une résine polymère.

Les caractéristiques fonctionnelles de la résine sont notamment une résistance chimique au fluide circulant dans la conduite, une résistance thermique dans une plage de températures prédéfinie (par exemple -40°C à +150°C), une adhésion à la plaquette 32 de circuit imprimé, une conductivité thermique suffisante, une formulation relativement souple pour éviter la détérioration ou le déplacement des composants montés sur la plaquette 32.

Par exemple, les résines époxy avec une formulation souple et une température de transition vitreuse élevée (supérieure à 150°C) ou une résine silicone pour des applications de fluide autre que le carburant et l'huile moteur pourraient convenir.

En outre, de préférence, le matériau d'étanchéité du corps d'étanchéité 60 est destiné à solidifier dans le bac 44 pour former une masse d'ancrage 64 de l'extrémité distale 28A du détecteur 28, le bac 44 comprenant au fond un orifice 52 de passage de l'organe de jonction 36.

Dans l'exemple décrit et illustré en **figure 2**, la partie de détecteur 20 comprend encore une jupe périphérique externe 56 entourant le logement 42, ce dernier s'étendant axialement à l'intérieur de la jupe 56.

Cette jupe périphérique externe 56 comprend en outre sur sa paroi externe un bourrelet périphérique 58. Ce relief 58 est destiné à coopérer avec un relief complémentaire 66 ménagé sur le support 14 décrit de façon plus détaillée ci-dessous.

Dans ce premier mode de réalisation illustré sur **les** **figures 1 à 6**, le support 14 comprend une portion cylindrique de révolution 70 autour de l'axe principal X et un prolongement axial 72 destiné à être inséré à l'intérieur d'un orifice d'une conduite (non représentée sur les figures) de circulation du fluide.

Dans cet exemple, la portion cylindrique de révolution 70 présente une extrémité distale 70A ouverte et une extrémité proximale 70B fermée communiquant avec le milieu à mesurer par l'intermédiaire du prolongement axial 72. La portion cylindrique 70 délimite en outre une paroi externe périphérique 74 pourvue par exemple d'une forme hexagonale et une paroi interne délimitant avec l'extrémité proximale 70B une chambre 76 de mesure dans laquelle le détecteur 28 est destiné à s'étendre en service.

Dans l'exemple illustré notamment sur **la** **figure 1**, le support 14 et le dispositif 12 sont assemblés par sertissage. Par exemple, afin d'assembler le support 12 et le dispositif 14, la paroi périphérique 74 est pourvu d'un bord d'extrémité 78 venant retenir le dispositif par sertissage autour du bourrelet 58 du dispositif 12. A cet effet, la paroi périphérique 74 du support 14 comprend une portion amincie formant le bord d'extrémité 78 destiné à être serti.

En outre, comme cela est visible sur **la** **figure 5**, la paroi périphérique interne du support 12 présente un décrochement formant le relief complémentaire 66. En position de service, la face frontale de la jupe 56 vient en butée contre le fond de la chambre 76 du support 12 de telle sorte que les deux reliefs 58 et 66 délimitent ensemble une gorge périphérique 68 de réception d'un joint torique d'environnement 80. Par ailleurs, l'embout formant prolongement axial 74 du support 12 est pourvu d'une rainure périphérique 84 pour recevoir un joint torique d'étanchéité 82 destiné à coopérer avec la conduite non représentée dans laquelle circule le fluide.

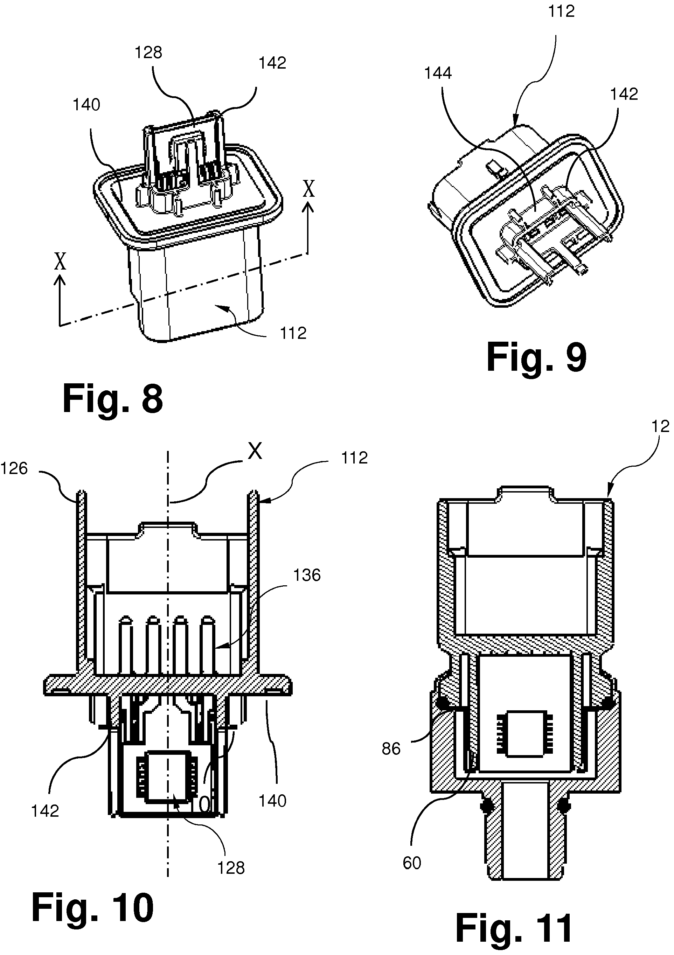

Dans une variante illustrée sur **la** **figure 11**, le corps d'étanchéité 60 est réalisé dans un matériau élastiquement déformable tel qu'un élastomère. Dans ce cas, le corps d'étanchéité 60 est pourvu d'un bord périphérique muni d'une extrémité libre épaissie formant une lèvre d'étanchéité 86. Cette lèvre 86 a pour fonction de réaliser l'étanchéité à l'environnement et est positionnée avantageusement à l'intérieur de la gorge périphérique 68.

On a représenté sur **les** **figures 7 à 10** un système de détermination selon un deuxième mode de réalisation. Dans ce deuxième mode de réalisation, les éléments analogues à ceux du premier mode de réalisation portent des références augmentées d'une centaine.

Dans ce mode de réalisation, le support 114 comprend deux embouts 190 de raccordement à au moins deux tronçons d'une conduite de circulation de fluide externe (non représentés). En outre, le support 114 comprend une chambre 176 de mesure en forme de cuve 170 de forme générale rectangulaire. Cette chambre 176 présente également une paroi latérale périphérique 174 à partir de laquelle s'étendent les deux embouts de raccordement 190. En outre, le support 114 comprend par exemple un pion d'ancrage 192 à une structure fixe (non représentée) montée axialement à partir du fond de la cuve 170.

Dans ce mode de réalisation, le dispositif 12 et le support 14 comprennent des moyens d'assemblage par encastrement par exemple par coopération de moyens à rainure et à dent périphériques ménagées sur le dispositif 12 et le support 14. En variante, le dispositif 12 et le support 14 peuvent être assemblés par soudure laser ou autres.

En outre, comme cela est visible sur **les** **figures 8 et 9**, le dispositif de mesure 112 comprend un embout connecteur 126 monté sur un socle 140 formant la paroi de séparation 140 entre la partie de connecteur 118 et la partie de détecteur 120. Le logement 142 s'étend axialement à partir de ce socle 140 de sorte que le détecteur 128 en position de service est complètement immergé.

Dans ce deuxième mode de réalisation, le corps d'étanchéité 160 est formé par une couche de revêtement tout comme le corps d'étanchéité 60 précédemment détaillé. En particulier, le logement 142 présente la même configuration que le logement 42. Le dispositif de mesure 112 est donc de fabrication très simple, d'encombrement minimal et d'une grande robustesse et fiabilité.

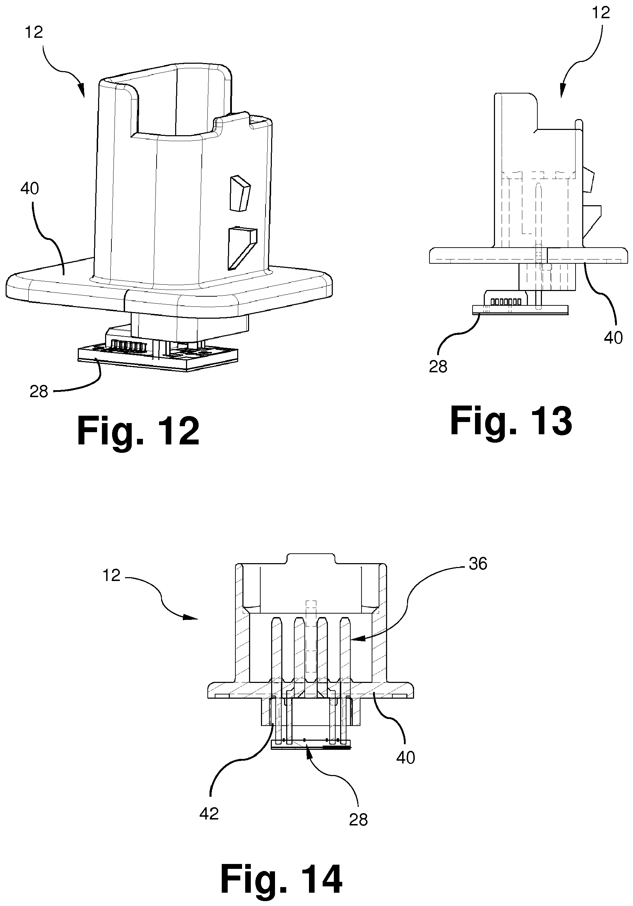

Sur les figures 12 à 14, on a représenté le dispositif de mesure 12 selon un troisième mode de réalisation. Les éléments analogues au premier mode de réalisation portent des références identiques.

Selon **la** **figure 12**, le dispositif de mesure 12 comprend un un boîtier 16 d'axe principal X avec une partie distale 18 de connecteur et une partie proximale 20 de mesure.

Sur **les** **figures 2 à 5**, on voit que le dispositif 12 comprend encore un organe 36 de jonction électrique du détecteur 28 et du connecteur 22. De préférence et comme cela est illustré sur **la** **figure 5**, le connecteur 22 est formé par une partie distale 36A de l'organe de jonction électrique 36 faisant saillie à l'intérieur de la partie de connecteur 18. En outre, l'organe de jonction 36 comprend de préférence une partie proximale 36B qui est fixée au détecteur 28.

A cet effet, par exemple, l'organe de jonction 36 comprend une pluralité de broches métalliques 38 qui s'étendent en saillie orthogonalement à la face 32A de contact électrique du détecteur 28 (**figure 4A**).

En outre, comme cela est visible sur **la** **figure 5**, les parties de connecteur 18 et de détecteur 20 sont séparées entre elles transversalement par une paroi 40 de séparation munie d'au moins un orifice traversant par lequel l'organe de jonction électrique 36 s'étend de part et d'autre de la paroi 40.

De préférence, la partie de détecteur 20 délimite un logement 42 à l'intérieur duquel les broches de l'organe 36 s'étendent et viennent s'embrocher orthogonalement dans le détecteur 28. Le détecteur 28 s'étend dans ce troisième mode de réalisation transversalement.

On va maintenant décrire les principaux aspects de fabrication d'un système de mesure selon le premier mode de réalisation. On comprendra que la description ci-après est transposable au second ou au troisième mode de réalisation sans que cela ne soit plus détaillé.

Au préalable, au cours d'une étape non illustrée, les différents composants du système 10 sont fabriqués. La fabrication des composants est relativement simple et peut être réalisée par moulage par injection ou encore par usinage en fonction des matériaux utilisés ou selon encore d'autres procédés de fabrication. Par exemple, pour fabriquer le dispositif de mesure 12, on moule une matière plastique. Ce moulage est prévu pour former d'un seul tenant le connecteur 22, la jupe extérieure 56, les reliefs d'emboîtement 58 et 66 ainsi que le logement 42.

Les broches 38 sont au cours d'une étape d'assemblage montée sur la plaquette 32 du détecteur 28. Les broches 38 sont par exemple montées en force à l'intérieur des orifices de passage 52 prévus à cet effet.

Le détecteur 28 ainsi muni des broches 38 est inséré dans le logement 42 grâce aux rails de guidage jusqu'à ce que les broches 38 traversent la paroi de séparation 40 pour faire saillie à l'intérieur du corps creux 24 de la partie de connecteur 18. Les broches 38 peuvent être montées en force à l'intérieur des orifices de passage 52 prévus à cet effet. Toutefois, en variante, les broches 38 peuvent être surmoulées lors de la première étape de fabrication du dispositif de mesure 12.

Puis, au cours d'une première étape d'application du matériau d'étanchéité, le matériau d'étanchéité du corps d'étanchéité 60 est déposé en couche sur la face 32A de la plaquette 32 du détecteur 28 portant les composants électroniques. Ce recouvrement partiel de la plaquette 32 sur une seule face est préféré lorsqu'un recouvrement de la face opposée pourvue d'une surface sensible à la pression pourrait nuire à la fiabilité de la mesure de la pression.

Dans les autres cas, de préférence, le recouvrement des deux faces de la plaquette 32 est réalisé. De cette manière, le détecteur 28 est isolé du milieu tout en assurant en même temps des caractéristiques fonctionnelles performantes grâce au contact direct avec le détecteur 28.

De préférence de telle sorte que le matériau d'étanchéité remplisse le bac 44 du logement 42.

Au cours d'une troisième étape d'assemblage illustré sur **la** **figure 5**, le joint d'environnement 80 peut être positionné autour de la paroi externe de la jupe 56 du dispositif de mesure 12 de telle façon qu'il s'étende en-dessous du bourrelet 58. Le dispositif 12 est alors monté à l'intérieur du support 14.

Ensuite, une dernière étape de sertissage du bord d'extrémité de la sur le dispositif 12 vient compléter cet assemblage et permet d'obtenir le système 10 représenté à **la** **figure 1****.**

Ce système tel que présenté ci-dessus présente de nombreux avantages, notamment une grande robustesse, une simplicité de réalisation et des performances complémentaires de fiabilité des mesures grâce à des échanges avec le milieu augmentés.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Dispositif (12 ; 112) de mesure d'au moins un paramètre physique d'un fluide, en particulier un fluide d'un circuit d'un véhicule automobile, comprenant un boîtier (16 ; 116) d'axe principal X, ledit boîtier (16 ; 116) comprenant :
- une partie distale (18; 118) de connecteur comprenant un connecteur (22 ; 122) de raccordement électrique à un circuit électrique externe,
- une partie proximale (20 ; 120) de mesure comprenant un détecteur (28 ; 128) du paramètre physique destiné à être en contact fluidique, le détecteur (28 ; 128) a une forme générale de plaquette (32 ; 132) délimitant une première face (32A ; 132A) de contact électrique et une deuxième face opposée (32B ; 132B) de mesure,
- un organe (36 ; 136) de jonction électrique du détecteur (28 ; 128) et du connecteur (22 ; 122),
**caractérisé en ce que** le dispositif (12 ; 112) comprend un corps d'étanchéité (60 ; 160) au fluide configuré pour recouvrir intimement au moins la première face (32A) de contact électrique du détecteur (28 ; 128) en assurant une continuité d'étanchéité avec une zone de jonction du détecteur (28 ; 128) avec l'organe de jonction électrique (36 ; 136) **et en ce que** le détecteur (28, 128) est configuré dans le dispositif (12 ; 112) de telle sorte que les deux faces du détecteur (28 ; 128) soient immergées et en contact fluidique direct.

2. Dispositif (12 ; 112) selon la revendication précédente, dans lequel la partie de mesure (20 ; 120) délimite un logement (42 ; 142) configuré pour recevoir et retenir verticalement le détecteur (28 ; 128) de telle sorte que les faces (32A, 32B ; 132A, 132B) du détecteur (28 ; 128) s'étendent sensiblement parallèlement à l'axe principal X.

3. Dispositif (12 ; 112) selon la revendication 1, dans lequel le détecteur (28 ; 128) s'étend transversalement et est retenu à la partie de mesure (20 ; 120) par l'intermédiaire de l'organe de jonction (36 ; 136).

4. Dispositif selon l'une quelconque des revendications précédentes, dans lequel la première face (32A) porte au moins un composant électronique et/ou un circuit électronique et la deuxième face (32B) est pourvue d'une surface sensible à la pression.

5. Dispositif selon l'une quelconque des revendications précédentes, dans lequel le corps d'étanchéité (60 ; 160) est destiné à envelopper intimement les deux faces du détecteur (28 ; 128).

6. Dispositif (12 ; 120) selon la revendication précédente, dans lequel les parties de connecteur (18 ; 118) et de détecteur (20 ; 120) sont séparées entre elles transversalement par une paroi de séparation (40 ; 140) munie d'au moins un orifice traversant (52 ; 152) par lequel l'organe de jonction électrique (36 ; 136) s'étend de part et d'autre de la paroi (40 ; 140).

7. Dispositif (12 ; 120) selon l'une quelconque des revendications précédentes, dans lequel le connecteur (22 ; 122) est formé par une partie distale de l'organe de jonction électrique (36 ; 136) faisant saillie à l'intérieur de la partie de connecteur (18 ; 118).

8. Dispositif (12 ; 112) selon l'une quelconque des revendications précédentes, dans lequel l'organe de jonction (36 ; 136) comprend une pluralité de broches métalliques (38 ; 138) qui s'étendent en saillie dans le prolongement d'une face du détecteur (28 ; 128) ou orthogonalement à une face du détecteur (28 ; 128).

9. Dispositif (12 ; 112) selon l'une quelconque des revendications précédentes, dans lequel la partie de connecteur (18 ; 118) comprend un embout (26 ; 126) délimitant un corps creux (24 ; 124) à l'intérieur duquel le connecteur (22 ; 122) fait saillie.

10. Dispositif (12 ; 112) selon l'une quelconque des revendications précédentes, dans lequel le corps d'étanchéité (60 ; 160) est formé par une couche (62 ; 162) de revêtement déposée sur au moins sur la première face (32A) du détecteur (28 ; 128) réalisée à partir d'un matériau d'étanchéité pouvant s'écouler dans un premier état et pouvant solidifier dans un deuxième état, par exemple une résine époxy ou silicone.

11. Dispositif (12 ; 112) selon l'une quelconque des revendications précédentes, dans lequel le logement (42 ; 142) comprend à une extrémité distale (42A ; 142A) une embase (44 ; 144) qui forme un bac (44 ; 144) pour contenir un matériau d'étanchéité pouvant s'écouler, par exemple une résine une résine époxy ou silicone.

12. Dispositif (12 ; 112) selon la revendication précédente, dans lequel le matériau d'étanchéité est destiné à solidifier dans le bac (44 ; 144) pour former une masse (64 ; 164) d'ancrage d'une extrémité distale (28B ; 128B) du détecteur (28 ; 128), le bac (44 ; 144) comprenant au fond un orifice (52 ; 152) de passage de l'organe de jonction (36).

13. Dispositif (12 ; 112) selon l'une quelconque des revendications précédentes, dans lequel le corps d'étanchéité (60 ; 160) est formé par un unique matériau d'étanchéité destiné à recouvrir au moins partiellement la surface externe du détecteur (28 ; 128) en formant une couche (62 ; 162) et à former une masse (64 ; 164) à l'extrémité distale du détecteur (28 ; 128).

14. Dispositif (12 ; 112) selon l'une quelconque des revendications précédentes, dans lequel le logement (42 ; 142) s'étend axialement et est presque totalement ajouré sur son extrémité proximale (42B ; 142B) pour permettre au fluide de circuler autour du détecteur (28 ; 128).

15. Dispositif (12 ; 112) selon la revendication précédente, dans lequel le logement (42 ; 142) est formé à son extrémité proximale (42A ; 142B) par des rails (48 ; 148) de guidage profilés.

16. Dispositif (12) selon l'une quelconque des revendications 1 à 9, dans lequel le corps d'étanchéité (60 ; 160) est pourvu d'un bord périphérique muni d'une extrémité libre épaissie formant une lèvre d'étanchéité (86) destinée à être partiellement logée dans une gorge périphérique (68) du boîtier (16).

17. Dispositif (12) selon la revendication précédente, dans lequel le corps d'étanchéité (60 ; 160) est réalisé dans un matériau élastiquement déformable tel qu'un élastomère.

18. Dispositif (12) selon l'une quelconque des revendications précédentes, dans lequel le détecteur (28) comprend au moins un élément sensible (30) à un paramètre physique choisi parmi un capteur d'humidité, un capteur de pression et un capteur de température.

19. Dispositif (12) selon l'une quelconque des revendications précédentes, dans lequel la plaquette (32) du détecteur (28) comprend une partie principale et un prolongement axial de section transversale rétrécie.

20. Système (10 ; 100) de mesure d'un paramètre d'un fluide, comprenant un dispositif de détection d'un paramètre physique et un support du dispositif de mesure, ledit support comprenant une chambre de circulation de fluide, **caractérisé en ce que** le dispositif de mesure étant selon l'une quelconque des revendications précédentes, le dispositif (12 ; 112) et le support (14 ; 114) comprennent des moyens d'assemblage complémentaires **et en ce que** dans la position assemblée, le détecteur (28 ; 128) est destiné à s'étendre à l'intérieur de la chambre de circulation de fluide.

21. Système (10 ; 100) de mesure selon la revendication précédente, dans lequel le support (14 ; 114) comprend deux embouts de raccordement à au moins deux tronçons d'une conduite de circulation de fluide externe.

22. Système (10 ; 100) selon la revendication 20 ou 21, dans lequel le support (14 ; 114) comprend une portion cylindrique de révolution (70) autour de l'axe principal X formant la chambre de mesure (76) et un prolongement axial (72) destiné à être inséré à l'intérieur d'un orifice d'une conduite de circulation du fluide.

23. Système (10 ; 100) selon l'une quelconque des revendications 20 à 22, dans lequel le dispositif (12 ; 112) et le support (14 ; 114) délimite à l'état assemblé une gorge périphérique (68) de réception d'un joint torique (80 ; 69) d'environnement.
